# EUROPÄISCHE PATENTANMELDUNG

(11) **EP 1 258 795 A1**
(43) Veröffentlichungstag der Anmeldung: **20.11.2002**
(21) Anmeldenummer: 01111791.8
(22) Anmeldetag: 15.05.2001
(51) Int. Cl.: G06F 1/00, G07C 9/00

(54) **Anordnung zur sicheren Erzeugung von Signaturen für Personal-computer und Mobiltelefone.**

(71) Anmelder: SIEMENS AKTIENGESELLSCHAFT, 80333 München (DE)
(72) Erfinder: Markwitz, Wernhard, Dr., 80469 München (DE)

(57) **Zusammenfassung**

Die Erfindung betrifft einen Signaturstecker, bei dem ein Smart-Card-Chip zur Durchführung einer Signatur, zumindest eine Schnittstelle zu Signaturanforderungsgeräten, und Mittel zur Durchführung einer Authentifizierung mit Biometriedaten vorgesehen sind.

## Beschreibung

Die Erfindung betrifft einen Signaturstecker.

Dieser Signaturstecker ist eine externe Anordnung zur sicheren Erzeugung von Signaturen für beispielsweise Personalcomputer, Mobiltelefone und auch für Automobile.

Mit einem solchen Signaturverfahren werden elektronische Signaturen für e-commerce, e-government usw. sicher erzeugt. Signiert wird beispielsweise ein Dokument von einer Person, die es geschrieben hat. Im allgemeinen wird dabei für das Dokument, beziehungsweise für den Inhalt desselben ein Hash-Wert erzeugt, der mit einem geheimen Schlüssel der Person verschlüsselt wird. Der geheime Schlüssel sowie ein zugehöriger öffentlicher Schlüssel der Person sind Teile des Public-Key-Systems. Der Empfänger des Dokumentes kann durch Entschlüsselung der Signatur mit dem öffentlichen Schlüssel der Person verifizieren, dass diese Person das entsprechende Dokument signiert beziehungsweise unterzeichnet hat.

Zur Realisierung der Signatur ist ein vertrauenswürdiger Signatur-Server denkbar, der im Auftrag des Nutzers beziehungsweise der Person die Erzeugung einer qualifizierten digitalen Signatur vornimmt. Eine weitere Möglichkeit besteht in der Verwendung eines mobilen Endgerätes, beispielsweise eines Mobilfunkgerätes, zur Erzeugung der Signatur. Hierbei wird ein Dokument mit Text, oder eine Tabelle am Mobilfunkgerät eingegeben, über die sogenannte SIM-Karte (Subscriber Identifikation Module) dieses Dokument signiert und an einen Kommunikationsteilnehmer abgeschickt. Der Benutzer muss bei der Eingabe der Daten am Mobilfunkgerät starke Einschränkungen hinsichtlich der Bearbeitung und Darstellung hinnehmen.

Bei der Verwendung eines Personal Computers wird für das Signaturverfahren beispielsweise ein Smart-Card-Leser verwendet. Bei der Erzeugung der Signatur wird die Smart Card über die Eingabe einer PIN (Persönliche Identifizierungs Nummer) oder über die Eingabe eines biometrischen Merkmals, beispielsweise eines Fingerabdruckes, freigeschaltet wird. Die gleichartige Funktion hat auch die SIM-Karte im Mobilfunkgerät beziehungsweise im Handy, die ebenfalls über PIN oder Biometrie freigeschaltet wird..

Der Erfindung liegt die Aufgabe zugrunde, eine Anordnung der eingangs genannten Art anzugeben.

Diese Aufgabe wird erfindungsgemäß durch die im unabhängigen Anspruch angegebenen Merkmale gelöst.

Im folgenden wird die Erfindung anhand eines Ausführungsbeispieles beschrieben.

Die Erfindung geht aus von einem neueren Personalcomputer oder von einem Mobiltelefon. Bei beiden Geräten sind normalerweise standardisierte Schnittstellen, beispielsweise USB (Universal Serial Bus), vorhanden. Per USB lassen sich Peripherie-Endgeräte unkompliziert an den Personalcomputer beziehungsweise an das Mobiltelefon anschließen. Den paketorientierten, seriell ablaufenden Datenaustausch zwischen den einzelnen Komponenten regelt das USB-Protokoll.

Durch Anstecken eines kleinen Zusatzgerätes an die USB-Schnittstelle ähnlich eines Dongles kann damit eine digitale Signatur am betreffenden Gerät sicher vorgenommen werden. Dieses Zusatzgerät bildet sozusagen einen aktiven Stecker, der in der folgenden Beschreibung als Signaturstecker bezeichnet wird.

Dieser erfindungsgemäße Signaturstecker enthält vorzugsweise einen Smart-Card-Chip zur Durchführung der Rechenoperationen.

Ein solcher Chip mit einer entsprechenden Zulassung für die Durchführung der elektronischen Signatur ist im Fachhandel erhältlich.

Der Signaturstecker enthält weiter eine Standard-Schnittstelle zum Personalcomputer beziehungsweise Mobiltelefon, oder auch allgemein zu einem Signaturanforderungsgerät. An Stelle von Endgeräten der Kommunikationstechnik oder der Datenverarbeitungstechnik kann der Signaturstecker auch beispielsweise bei der Zugangssteuerung eines Automobiles verwendet werden.

Der Signaturstecker enthält vorzugsweise eine Biometrie-Datenerfassung, beispielsweise einen sogenannten Fingerprintsensor. Die Verarbeitung und Auswertung der entsprechenden Daten kann der schon vorhandene Smart-Card-Chip übernehmen.

Bei einer Weiterbildung der Erfindung kann zusätzlich eine Datums/Uhrzeiteinheit, beispielsweise mit DCF77- oder GPS-Funkuhr, sowie ein manipulationssicherer Signatur-Erstellungszähler vorgesehen sein. Des weiteren kann eine äußerst einfache Bedienoberfläche beziehungsweise eine kleines Mensch-Maschine-Interface, beispielsweise eine einzeilige Anzeige des Betrages und eine Leuchtdiode für OK und Alarm, sowie Tasten für OK und Löschen vorgesehen sein. Zudem sind Verschlüsselungsfunktionen in den Signaturstecker integrierbar.

Der Signaturstecker kann durch Vergießen gegen Manipulationen sicher geschützt werden und kann an heute eingeführten Endgeräten ohne zusätzliche Hardware eingesetzt werden. Das einfache Anstecken und Abnehmen des Signatursteckers bietet einen Schutz vor Missbrauch. Am Mobiltelefon und am Personalcomputer finden die gleichen oder zumindest sehr ähnliche Signaturabläufe statt. Beide Geräte werden nicht mit den Kosten für eine digitale Signatur belastet, da der Signaturstecker getrennt erwerbbar ist.

## Patentansprüche

1. Signaturstecker, bei dem
- ein Smart-Card-Chip zur Durchführung einer Signatur,
- zumindest eine Schnittstelle zu Signaturanforderungsgeräten, und
- Mittel zur Durchführung einer Authentifizierung mit Biometriedaten vorgesehen sind.

2. Signaturstecker, gemäß Anspruch 1
bei dem eine Benutzerschnittstelle vorgesehen ist.

3. Signaturstecker nach Anspruch 1 oder 2,
bei dem die Mittel einen Fingerprintsensor aufweisen.
